# EUROPÄISCHE PATENTSCHRIFT

(11) **EP 3 775 865 B1**
(45) Veröffentlichungstag und Bekanntmachung des Hinweises auf die Patenterteilung: **07.09.2022**
(21) Anmeldenummer: 19752928.2
(22) Anmeldetag: 22.07.2019
(51) Int. Cl.: G01N 27/626

(54) **FLAMMENIONISATIONSDETEKTOR UND VERFAHREN ZUR ANALYSE EINES SAUERSTOFFHALTIGEN MESSGASES**
FLAME IONISATION DETECTOR AND METHOD FOR ANALYSIS OF AN OXYGEN-CONTAINING GAS TO BE ANALYSED
DÉTECTEUR À IONISATION DE FLAMME ET PROCÉDÉ D'ANALYSE D'UN GAZ DE MESURE CONTENANT DE L'OXYGÈNE

(30) Priorität: 31.07.2018 EP 18186619; 10.07.2019 DE 102019210208
(43) Veröffentlichungstag der Anmeldung: 17.02.2021
(73) Patentinhaber: Siemens Aktiengesellschaft, 80333 München (DE)
(72) Erfinder: CALVO, Ricardo, 76133 Karlsruhe (DE); KLEIH, Hans-Günther, 76646 Bruchsal (DE); RICHTER, Josef, 76185 Karlsruhe (DE); SUTTER, Andreas, 76229 Karlsruhe (DE)
(86) Internationale Anmeldenummer: PCT/EP2019/069654
(87) Internationale Veröffentlichungsnummer: WO 2020/025380

(56) Entgegenhaltungen:
- DE-U1- 20 320 366
- JP-A- H05 119 006
- US-B1- 8 587 319
- US-B2- 7 704 748

## Beschreibung

Die Erfindung betrifft einen Flammenionisationsdetektor und ein Verfahren zur Analyse eines sauerstoffhaltigen Messgases.

Flammenionisationsdetektoren (FIDs) dienen zur Messung und Überwachung von organischen Verbindungen wie Kohlenwasserstoffen in Gasen, wobei in einer Gasflamme kohlenstoffhaltige Moleküle ionisiert und durch Messung eines elektrischen Stromes nachgewiesen werden. Dazu werden einem Brenner die im Messgas enthaltenen Kohlenwasserstoffe im Beisein von Luft und unter Zufuhr von Wasserstoff verbrannt. Beim Verbrennen wird der organisch gebundene Kohlenwasserstoffanteil ionisiert. Die Ionen werden durch ein zwischen zwei Elektroden erzeugtes elektrisches Feld in einen Ionenstrom umgesetzt, der gemessen und in einer Auswerteeinrichtung zur Bestimmung der Kohlenwasserstoff-Gesamtkonzentration des Messgases ausgewertet wird. Mittels eines Temperatursensors kann detektiert werden, ob die Gasflamme brennt oder erloschen ist.

Aus der DE 7107607 U oder der US 7,704,748 B2 ist es bekannt, die Querempfindlichkeit von Flammenionisationsdetektoren gegenüber Sauerstoff dadurch auszugleichen, dass als Brenngas anstelle von reinem Wasserstoff beispielsweise ein Wasserstoff/Helium-Gemisch oder ein Wasserstoff/Stickstoff-Gemisch verwendet wird. Da ein kontinuierlicher Betrieb von Flammenionisationsdetektoren mit einem solchen Brenngasgemisch vergleichsweise teuer ist, wird in der der DE 7107607 U zur Vermeidung der Sauerstoffquerempfindlichkeit eine Nadelventil- oder Kapillaranordnung am Brenner vorgeschlagen, durch die ein bestimmter Luftstrom von innen der Brennerspitze zugeführt wird.

Zur Lösung desselben Problems sind aus der DE 203 20 366 U1 oder der DE 10 2015 121 534 A1 spezielle Brennerdüsen bekannt, bei denen mehrere Düsenöffnungen zur Bildung mehrerer Flammen vorgesehen sind oder Brennluft durch eine Ausnehmung in der Brennerdüse noch vor der Flamme in das Gasgemisch aus Brenngas und Messgas gelangt.

Aus der US 2003/0085714 A1 oder der US 8,587,319 B1 ist es bekannt, die Temperatur in einem Flammenionisationsdetektor in einem Bereich über der Flamme zu messen und anhand der gemessenen Temperatur die Gaszuflüsse (Messgas, Brenngas, Brennluft) zu dem Flammenionisationsdetektor zu regeln, um seinen Arbeitspunkt stabil zu halten. Das oben angegebene Problem der Querempfindlichkeit von Flammenionisationsdetektoren gegenüber Sauerstoff wird nicht angesprochen bzw. tritt nicht auf, wenn, wie aus der US 2003/0085714 A1 bekannt, der Flammenionisationsdetektor Bestandteil eines Prozess-Gaschromatographen ist und die Komponenten des zu messenden Gases zeitlich aufgetrennt erhält.

Aus der DE 10 2013 205 139 B3 ist es bekannt, die Messprinzipien Flammenionisationsdetektion und Flammentemperaturanalyse (FTA) in einem Flammenionisationsdetektor miteinander zu kombinieren und dazu die Temperatur der Flamme zu messen. Durch die Auswertung des gemessenen Ionenstroms ist sichergestellt, dass eine schnelle Ansprechzeit vorliegt. Andererseits sichert die Auswertung der Flammentemperatur eine präzise Messung. Eine Auswerteeinheit bestimmt aus beiden Messungen einen Ausgabewert als Maß für die Konzentration entflammbarer Substanzen in dem Messgas. Wie die beiden Einzelergebnisse aus der Flammenionisationsdetektion und der Flammentemperaturanalyse zu dem einen Ausgabewert miteinander verknüpft werden, ist nicht offenbart. Auch hier wird das Problem der Querempfindlichkeit von Flammenionisationsdetektoren gegenüber Sauerstoff nicht angesprochen.

JP H05 119006 A ist es schließlich bekannt, mittels eines separaten Sauerstoffmessers den Sauerstoffanteil in dem Messgas zu messen und damit die Sauerstoffquerempfindlichkeit des Flammenionisationsdetektors zu kompensieren.

Der Erfindung liegt die Aufgabe zugrunde, die Querempfindlichkeit von Flammenionisationsdetektoren gegenüber Sauerstoff zur verringern, ohne dass dazu ein Sauerstoffmesser, spezielle Brenngasgemische oder spezielle Brennerdüsen erforderlich sind.

Gemäß der Erfindung wird die Aufgabe durch den in Anspruch 1 angegebenen Flammenionisationsdetektor und das in Anspruch 4 angegebene Verfahren gelöst.

Vorteilhafte Weiterbildungen des erfindungsgemäßen Flammenionisationsdetektor und des Verfahrens ergeben sich aus den Unteransprüchen.

Gegenstand der Erfindung ist somit ein Flammenionisationsdetektor, mit einem Brenner, um ein sauerstoffhaltiges Messgas im Beisein von Luft und unter Zufuhr eines wasserstoffhaltigen Brenngases in einer Gasflamme zu verbrennen, mit einer Messeinrichtung, um einen Ionenstrom aus der Gasflamme zu einer Elektrode zu messen, mit einer den gemessenen Ionenstrom auswertenden Auswerteeinrichtung und mit einem die Temperatur der Gasflamme messenden Temperatursensor, wobei die Auswerteeinrichtung dazu ausgebildet ist, bei der Auswertung des gemessenen Ionenstroms dessen Querempfindlichkeit gegenüber dem Sauerstoff in dem Messgas mit der gemessenen Temperatur zu kompensieren.

Gegenstand der Erfindung ist ferner ein Verfahren zur Analyse eines sauerstoffhaltigen Messgases auf Basis der Flammenionisation, bei dem das Messgas im Beisein von Luft und unter Zufuhr eines wasserstoffhaltigen Brenngases in einer Gasflamme verbrannt und ein Ionenstrom aus der Gasflamme zu einer Elektrode gemessen und ausgewertet wird, wobei die Temperatur der Gasflamme gemessen wird und mit der gemessenen Temperatur die Querempfindlichkeit der Auswertung des gemessenen Ionenstroms gegenüber dem Sauerstoff in dem Messgas kompensiert wird.

Die Erfindung beruht auf der Beobachtung, dass die Temperatur der Gasflamme kaum messbar von den Kohlenwasserstoffanteilen in dem Messgas, wohl aber von dessen Sauerstoffgehalt abhängig ist. Die Erfindung macht sich diese Beobachtung zunutze, indem anhand der gemessenen Flammentemperatur die Querempfindlichkeit des Flammenionisationsdetektors gegenüber dem Sauerstoffgehalt des Messgases kompensiert wird. Es werden keine speziellen und teuren Brenngasgemische mehr benötigt, und es sind auch keine speziell konstruierten Brennerdüsen erforderlich.

Da sich die Flammentemperatur mit variierendem Sauerstoffgehalt nur gering ändert, kann die erfindungsgemäße Kompensation der Sauerstoffquerempfindlichkeit durch Schwankungen oder Langzeitänderungen der Gaszuflüsse (Messgas, Brenngas, Brennluft) verfälscht werden. Um dies zu verhindern, können die Drücke der zugeführten Gase auf einen konstanten Absolutdruck geregelt werden. Bei Verwendung von Relativdruckreglern erfolgt die Regelung gegenüber dem atmosphärischen Druck (Umgebungsdruck), der sich jedoch ändern kann. In diesem Fall kann der Umgebungsdruck in vorteilhafter Weise gemessen werden, um damit die für die Kompensation der Sauerstoffquerempfindlichkeit verwendete Messwerte der Flammentemperatur zu korrigieren.

Die Erfindung wird im Folgenden beispielhaft anhand der Zeichnungen näher erläutert; im Einzelnen zeigen:
- Fig. 1: einen Flammenionisationsdetektor und
- Fig. 2: ein Beispiel für die Abhängigkeit des Ionenstroms und der Flammentemperatur von dem Sauerstoffgehalt eines Nullgases.

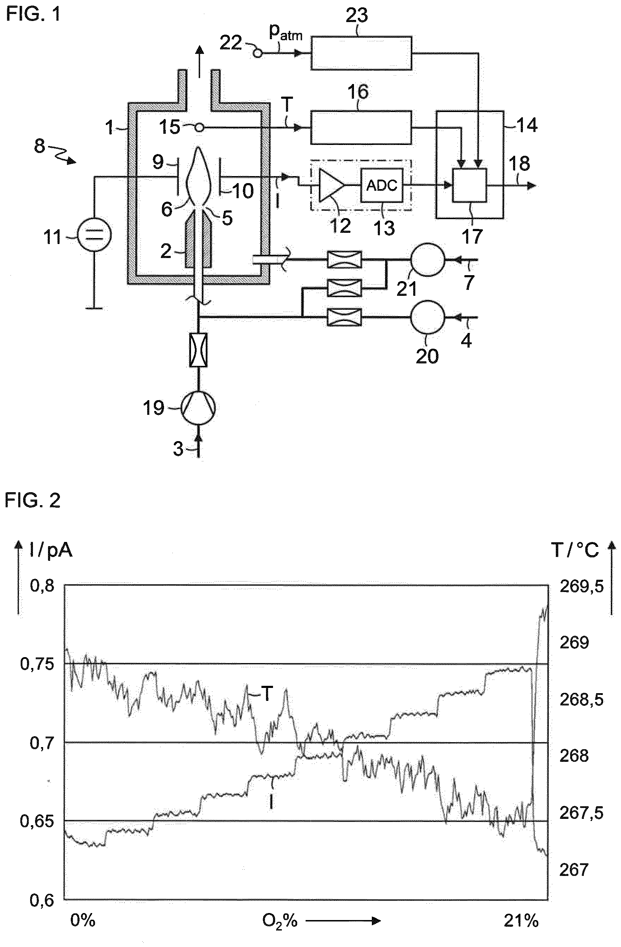

Fig. 1 zeigt in vereinfachter schematischer Darstellung einen Flammenionisationsdetektor mit einem Brennraum 1 und einem darin angeordneten oder in ihn hineinragenden Brenner (Brenndüse) 2. Dem Brenner 2 werden eingangsseitig ein sauerstoffhaltiges Messgas 3 und ein wasserstoffhaltiges Brenngas 4, vorzugsweise reiner Wasserstoff, zugeführt, die vor oder in dem Brenner 2 gemischt und an einer ausgangsseitigen Mündung 5 des Brenners 2 in einer Flamme 6 verbrannt werden. Zusätzlich wird sauerstoffhaltige Brennluft 7, vorzugsweise gereinigte kohlenwasserstoff-freie Umgebungsluft, mit konstanten rund 21 Vol.-%, in den Brennraum 2 geleitet.

Beim Verbrennen des Messgases 3 wird der organisch gebundene Kohlenwasserstoffanteil ionisiert. Um diesen Kohlenwasserstoffanteil zu messen, ist eine Messeinrichtung 8 mit zwei Elektroden 9, 10 vorgesehen, zwischen denen die Gasflamme 6 brennt. Alternativ zu dem gezeigten Beispiel kann eine der Elektroden von dem Brenner 2 gebildet und die andere Elektrode über der Flamme 6 angeordnet sein. Mittels einer Spannungsquelle 11 wird zwischen den Elektroden 9, 10 ein elektrisches Feld erzeugt, aufgrund dessen die Ionen aus der Gasflamme 6 in einem Ionenstrom I zu einer der Elektroden 9, 10 fließen. Der Ionenstrom I wird mittels eines hochempfindlichen Verstärkers 12 gemessen, digitalisiert (ADC 13) und in einer Auswerteeinrichtung 14 zur Bestimmung der Kohlenwasserstoff-Gesamtkonzentration in dem Messgas 3 ausgewertet.

In oder unmittelbar über der Gasflamme 6 ist ein Temperatursensor 15, z. B. ein Thermistor oder Thermoelement, angeordnet, der die Flammentemperatur T erfasst und über eine Temperaturmessschaltung 16 der Auswerteeinrichtung 14 zuführt.

Der Flammenionisationsdetektor weist eine Querempfindlichkeit gegenüber dem Sauerstoff in dem Messgas 3 auf, weil der gemessene Ionenstrom I nicht nur von dem Kohlenwasserstoffanteil des Messgases 3, sondern auch von seinem Sauerstoffgehalt abhängig ist.

Fig. 2 zeigt beispielhaft die Abhängigkeit des gemessenen Ionenstroms I und der Flammentemperatur T von dem Sauerstoffgehalt O₂% eines kohlenwasserstoff-freien Nullgases, wobei der Sauerstoffgehalt O₂% hier von links nach rechts in 10 Stufen von 0 % auf 21 % erhöht wird. Mit zunehmendem Sauerstoffgehalt O₂% nimmt die Flammentemperatur T ab, wohingegen der Ionenstrom I ansteigt.

Bei einem kohlenwasserstoffhaltigen Messgas 3 nehmen der Ionenstrom I und die Flammentemperatur T mit zunehmendem Sauerstoffgehalt O₂% des Messgases 3 ab. Das heißt, dass das die Kohlenwasserstoff-Gesamtkonzentration des Messgases 3 angebende FID-Messsignal bei einem im Vergleich zu dem Sauerstoffanteil bei der Kalibrierung höheren Sauerstoffgehalt O₂% zu niedrig und bei niedrigerem Sauerstoffgehalt O₂% zu hoch ist. Weiterhin konnte aber festgestellt werden, dass eine Änderung des Kohlenwasserstoffanteils des Messgases 3 keinen oder nur einen vernachlässigbaren Einfluss auf die Flammentemperatur T hat. Die Flammentemperatur T ermöglicht daher eine indirekte Messung des Sauerstoffgehalt O₂% und damit eine Korrektur des FID-Messsignals. Wenn also im Messbetrieb die Flammentemperatur T geringer als die bei der Kalibration ist, wird der aus dem Ionenstrom I ermittelte Kohlenwasserstoff-Gesamtkonzentration des Messgases 3 nach oben und im umgekehrten Fall nach unten korrigiert.

Die Auswerteeinrichtung 14 enthält daher eine Korrektureinrichtung 17, in der bei der Auswertung des gemessenen Ionenstroms I dessen Querempfindlichkeit gegenüber dem Sauerstoff in dem Messgas 3 mit der gemessenen Flammentemperatur T kompensiert wird. Das entsprechend korrigierte Auswerteergebnis aus dem gemessenen Ionenstrom I wird als Ergebnis 18 der Bestimmung der Kohlenwasserstoff-Gesamtkonzentration des Messgases 3 ausgegeben. Anstelle eines Wasserstoff/Helium-Gemischs, das vergleichsweise teuer ist, kann daher reiner Wasserstoff als Brenngas 4 verwendet werden.

Die Zuflüsse des Messgases 3, Brenngases 4 und der Brennluft 7 werden mithilfe eines Systems aus einer Messgaspumpe 19, Druckreglern 20, 21 und Kapillaren konstant gehalten. Bei den Druckreglern 20, 21 kann es sich um Absolutdruckregler oder Relativdruckregler handeln. Bei letzteren erfolgt die Regelung gegenüber dem Umgebungsdruck, so dass sich ein vom Umgebungsdruck unabhängiger Volumenstrom ergibt. Der Massenstrom ist jedoch von der Gasdichte und damit vom Umgebungsdruck abhängig, wobei bei einer Abnahme des Umgebungsdrucks auch die Massenflüsse der Gase abnehmen und damit auch die Flammentemperatur abnimmt. Ein Luftdrucksensor 22 erfasst den Umgebungsdruck pₐₜₘ und führt diesen der Auswerteeinrichtung 14 über eine Druckmessschaltung 23 zu. In der Korrektureinrichtung 17 wird die gemessene Flammentemperatur T mit dem gemessenen Umgebungsdruck pₐₜₘ korrigiert. Wenn also der im Messbetrieb gemessene Umgebungsdruck pₐₜₘ geringer als die bei der Kalibration ist, wird der für die Korrektur des FID-Messsignals verwendete Wert der gemessenen Flammentemperatur T nach oben und im umgekehrten Fall nach unten korrigiert.

## Patentansprüche

1. Flammenionisationsdetektor, mit einem Brenner (2), um ein sauerstoffhaltiges Messgas (3) im Beisein von Luft (7) und unter Zufuhr eines wasserstoffhaltigen Brenngases (4) in einer Gasflamme (6) zu verbrennen, mit einer Messeinrichtung (8), um einen Ionenstrom (I) aus der Gasflamme (6) zu einer Elektrode (10) zu messen, mit einer den gemessenen Ionenstrom (I) auswertenden Auswerteeinrichtung (14) und mit einem die Temperatur (T) der Gasflamme (6) messenden Temperatursensor (15), wobei die Auswerteeinrichtung (14) dazu ausgebildet ist, bei der Auswertung des gemessenen Ionenstroms (I) dessen Querempfindlichkeit gegenüber dem Sauerstoff in dem Messgas (3) mit der gemessenen Temperatur (T) zu kompensieren.

2. Flammenionisationsdetektor nach Anspruch 1, **gekennzeichnet durch** Absolutdruckregler (20, 21) für die zugeführten Gase (3, 4, 7).

3. Flammenionisationsdetektor nach Anspruch 1, **gekennzeichnet durch** Relativdruckregler (20, 21) für die zugeführten Gase (3, 4, 7) und einen den Umgebungsdruck (pₐₜₘ) messenden Luftdrucksensor (22), wobei die Auswerteeinrichtung (14) weiterhin dazu ausgebildet ist, die gemessene Temperatur (T) der Gasflamme (6) mit dem gemessenen Umgebungsdruck (pₐₜₘ) zu korrigieren.

4. Verfahren zur Analyse eines sauerstoffhaltigen Messgases (3) auf Basis der Flammenionisation, bei dem das Messgas (3) im Beisein von Luft (7) und unter Zufuhr eines wasserstoffhaltigen Brenngases (4) in einer Gasflamme (6) verbrannt und ein Ionenstrom (I) aus der Gasflamme (6) zu einer Elektrode (10) gemessen und ausgewertet wird, wobei die Temperatur (T) der Gasflamme (6) gemessen wird und mit der gemessenen Temperatur (T) die Querempfindlichkeit der Auswertung des gemessenen Ionenstroms (I) gegenüber dem Sauerstoff in dem Messgas (3) kompensiert wird.

5. Verfahren nach Anspruch 4, **dadurch gekennzeichnet, dass** als wasserstoffhaltiges Brenngas (4) reiner Wasserstoff zugeführt wird.

6. Verfahren nach Anspruch 4 oder 5, **dadurch gekennzeichnet, dass** der Druck der zugeführten Gase (3, 4, 7) auf einen konstanten Absolutdruck geregelt wird.

7. Verfahren nach Anspruch 4 oder 5, **dadurch gekennzeichnet, dass** der Druck der zugeführten Gase (3, 4, 7) auf einen konstanten Relativdruck gegenüber Umgebungsdruck (pₐₜₘ) geregelt wird, der Umgebungsdruck (pₐₜₘ) gemessen wird und die gemessene Temperatur (T) der Gasflamme (6) mit dem gemessenen Umgebungsdruck (pₐₜₘ) korrigiert wird.

## Claims

1. Flame ionisation detector, with a burner (2), in order to combust an oxygen-containing sample gas (3) in a gas flame (6) in the presence of air (7) and while supplying a hydrogen-containing combustion gas (4), with a measurement device (8), in order to measure an ion current (I) from the gas flame (6) to an electrode (10), with an evaluation device (14) evaluating the measured ion current (I) and with a temperature sensor (15) measuring the temperature (T) of the gas flame (6), wherein the evaluation device (14) is embodied, during the evaluation of the measured ion current (I), to compensate for the cross-sensitivity thereof to the oxygen in the sample gas (3) using the measured temperature (T).

2. Flame ionisation detector according to claim 1, **characterised by** absolute pressure regulators (20, 21) for the supplied gases (3, 4, 7).

3. Flame ionisation detector according to claim 1, **characterised by** relative pressure regulators (20, 21) for the supplied gases (3, 4, 7) and an air pressure sensor (22) measuring the ambient pressure (pₐₜₘ), wherein the evaluation device (14) is furthermore embodied to correct the measured temperature (T) of the gas flame (6) using the measured ambient pressure (pₐₜₘ) .

4. Method for analysing an oxygen-containing sample gas (3) on the basis of flame ionisation, in which the sample gas (3) is combusted in a gas flame (6) in the presence of air (7) and while supplying a hydrogen-containing combustion gas (4), and an ion current (I) from the gas flame (6) to an electrode (10) is measured and evaluated, wherein the temperature (T) of the gas flame (6) is measured and the cross-sensitivity of the evaluation of the measured ion current (I) to the oxygen in the sample gas (3) is compensated using the measured temperature (T).

5. Method according to claim 4, **characterised in that** pure hydrogen is supplied as the hydrogen-containing combustion gas (4) .

6. Method according to claim 4 or 5, **characterised in that** the pressure of the supplied gases (3, 4, 7) is regulated to a constant absolute pressure.

7. Method according to claim 4 or 5, **characterised in that** the pressure of the supplied gases (3, 4, 7) is regulated to a constant relative pressure in relation to ambient pressure (pₐₜₘ), the ambient pressure (pₐₜₘ) is measured and the measured temperature (T) of the gas flame (6) is compensated using the measured ambient pressure (pₐₜₘ).

## Revendications

1. Détecteur à ionisation de flamme, comprenant un brûleur (2), pour faire brûler un gaz (3) à mesurer, contenant de l'oxygène, en présence d'air (7) et avec apport d'un gaz (4) de combustion contenant de l'hydrogène, dans une flamme (6) de gaz, comprenant un dispositif (8) de mesure pour mesurer un courant (I) ionique allant de la flamme (6) de gaz à une électrode (10), comprenant un dispositif (14) d'analyse analysant le courant (I) ionique mesuré et comprenant une sonde (15) de température mesurant la température (T) de la flamme (6) de gaz, dans lequel le dispositif (14) d'analyse est constitué pour, à l'analyse du courant (I) ionique mesuré, compenser sa sensibilité transversale par rapport à l'oxygène dans le gaz (3) à mesurer avec la température (T) mesurée.

2. Détecteur à ionisation de flamme suivant la revendication 1, **caractérisé par** un régleur (20, 21) de la pression absolue des gaz (3, 4, 7) apportés.

3. Détecteur à ionisation de flamme suivant la revendication 1, **caractérisé par** un régleur (20, 21) de pression relative des gaz (3, 4, 7) apportés et un capteur (22) de la pression de l'air mesurant la pression (pₐₜₘ) ambiante, dans lequel le dispositif (14) d'analyse est constitué en outre pour corriger la température (T) mesurée de la flamme (6) de gaz par la pression (pₐₜₘ) ambiante mesurée.

4. Procédé d'analyse d'un gaz (3) à mesurer contenant de l'oxygène sur la base de l'ionisation de flamme, dans lequel on brûle le gaz (3) à mesurer, en la présence d'air (7) et avec apport d'un gaz (4) de combustion contenant de l'hydrogène, en une flamme (6) de gaz et on mesure et on analyse un courant (I) ionique allant de la flamme (6) de gaz à une électrode (10), dans lequel on mesure la température (T) de la flamme (6) de gaz à une électrode (10), dans lequel on mesure la température (T) de la flamme (6) de gaz et on compense, avec la température (T) mesurée, la sensibilité transversale de l'analyse du courant (I) ionique mesuré par rapport à l'oxygène dans le gaz (3) à mesurer.

5. Procédé suivant la revendication 4, **caractérisé en ce que** l'on apporte de l'hydrogène pur comme gaz (4) de combustion contenant de l'hydrogène.

6. Procédé suivant la revendication 4 ou 5, **caractérisé en ce que** l'on règle, à une pression absolue constante, la pression des gaz (3, 4, 7) apportés.

7. Procédé suivant la revendication 4 ou 5, **caractérisé en ce que** l'on règle, à une pression relative constante par rapport à la pression (pₐₜₘ) ambiante, la pression des gaz (3, 4, 7) apportés, on mesure la pression (pₐₜₘ) ambiante et on corrige la température (T) mesurée de la flamme (6) de gaz avec la pression (pₐₜₘ) ambiante mesurée.
